# DEMANDE DE BREVET EUROPEEN

(11) **EP 2 608 115 A1**
(43) Date de publication de la demande: **26.06.2013**
(21) Numéro de dépôt: 11306752.4
(22) Date de dépôt: 22.12.2011
(51) Int. Cl.: G06K 19/077, G06K 19/07

(54) **Carte à puce multi-formats**

(71) Demandeur: Gemalto SA, 92190 Meudon (FR)
(72) Inventeur: Ottobon, Stéphane, 92190 MEUDON (FR); Oddou, Laurent, 92190 MEUDON (FR); Froger, Alexis, 92190 MEUDON (FR); Renouard, Jérémy, 92190 MEUDON (FR)

(57) **Abrégé**

L'invention concerne une carte à puce multi-formats 1 comportant une puce à circuit intégré 2, solidaire d'un premier corps de carte 4 à puce d'un premier facteur de forme, une languette 6, jointe au premier corps de carte et détachable de ce premier corps de carte, un deuxième corps de carte 8 à puce d'un deuxième facteur de forme, de dimensions supérieures au premier facteur de forme, ce deuxième corps 8 comprenant un contour 7 et un logement 9 configuré pour recevoir le premier corps de carte. Le deuxième corps de carte 8 est joint à la languette 6, et est détachable de cette languette 6.

## Description

L'invention concerne une carte à puce multi-formats. L'invention concerne également un corps de carte à puce de format ISO ID-1 comprenant une carte à puce multi-formats.

Typiquement, les appareils de communications mobiles ont recours à une carte à puce, généralement connue sous le nom de « carte SIM » (de la langue anglaise « Subscriber Identity Module »). Cette carte à puce contient des données personnelles permettant l'identification d'un abonné. Une telle carte à puce peut être transférée d'un appareil de communications à un autre appareil. Au fil du temps, les exigences de miniaturisation des appareils de communications mobiles ont entraîné une réduction des dimensions de ces cartes à puce. Toutefois, les cartes de petites dimensions peuvent être difficiles à manipuler, par exemple lors du débranchement d'une carte hors d'un appareil de communications mobile.

Le brevet EP1190378B1 décrit un dispositif pour remédier à ce problème. Ce dispositif comprend :
- une carte à puce, comportant une puce à circuits intégrés, montée sur un corps de carte d'un premier format;
- une languette, jointe à et détachable de ce corps de carte.
   Cette languette facilite la manipulation de la carte à puce, et en particulier le détachement de cette carte à puce avant de l'insérer dans un appareil de communications mobile. Cependant, plusieurs facteurs de forme de carte coexistent. Par exemple, il existe plusieurs facteurs de forme de cartes SIM définis par des normes internationales. Communément, on parle de format 1 FF, 2FF, 3FF et 4FF. Ces facteurs de forme définissent des corps de carte de dimensions et d'épaisseurs différents. Le format 1 FF correspond au format ID-1 dit « carte de crédit » (85,60mm x 53,98mm x 0,82mm), le format 2FF correspond au format ID-000 encore appelé mini SIM (25mm x 15mm x 0,82mm), le format 3FF correspond au format micro-SIM (15mm x 12mm x 0,82mm) et le format 4FF correspond à la nouvelle génération au format non encore complètement définie mais qui sera de taille inférieure au 3FF et dont l'épaisseur devrait être de 0,68mm. Ainsi, la solution décrite limite l'utilisation de la carte à puce à des appareils de communications mobiles configurés pour ce même facteur de forme.

Il existe des adaptateurs, qui permettent l'utilisation d'une carte à puce d'un premier facteur de forme dans un appareil configuré pour recevoir des cartes à puce d'un deuxième facteur de forme, ce second facteur de forme étant de dimensions supérieures à celles du premier facteur de forme. Ces adaptateurs prennent la forme de corps de carte, comprenant un contour et un logement configuré pour recevoir une carte à puce d'un premier facteur de forme. Toutefois, la production de tels adaptateurs pour un couple de facteurs de forme donné nécessite le développement d'outils spécifiques, en particulier du fait des épaisseurs différentes. Cela en renchérit le coût de fabrication. En outre, cela cause d'importantes pertes de matériaux.

L'invention vise à résoudre un ou plusieurs de ces inconvénients. L'invention porte ainsi sur une carte à puce multi-formats comportant :
- une puce à circuit intégré, solidaire d'un premier corps de carte à puce d'un premier facteur de forme ;
- une languette, jointe au premier corps de carte et détachable de ce premier corps de carte ;
- un deuxième corps de carte à puce d'un deuxième facteur de forme, de dimensions supérieures au premier facteur de forme, ce deuxième corps comprenant un contour et un logement configuré pour recevoir le premier corps de carte ; dans lequel le deuxième corps de carte est joint à la languette, et est détachable de cette languette.

Ainsi, la carte à puce inclut des adaptateurs de plusieurs facteurs de forme, ce qui permet à un utilisateur d'utiliser une même puce dans des appareils configurés pour recevoir des cartes à puce de facteur de forme différents. De plus, cette carte à puce peut être fabriquée avec les procédés de fabrication typiquement utilisés dans l'industrie, ce qui ne nécessite pas de développement d'outillage nouveau. Enfin, la consommation de matière première est réduite.

Selon une variante, le contour du deuxième corps de carte a une épaisseur supérieure à celle de la languette et du premier corps de carte.

Selon une autre variante, la carte à puce comprend un troisième corps de carte à puce d'un troisième facteur de forme, ce troisième corps de carte comprenant un autre logement configuré pour recevoir le premier corps de carte.

Selon une autre variante, le troisième corps de carte est joint au deuxième corps de carte, et est détachable de ce deuxième corps de carte.

Selon encore une autre variante, le troisième corps de carte est joint à la languette, et est détachable de cette languette.

Selon une autre variante, le premier facteur de forme est 4FF.

Selon une autre variante, l'un ou l'autre du deuxième et du troisième facteur de forme est 2FF ou 3FF.

Selon un autre aspect, l'invention concerne un corps de carte de format ISO ID-1, comprenant au moins une carte à puce multi-formats selon l'invention.

D'autres caractéristiques et avantages de l'invention ressortiront clairement de la description qui en est faite ci-après, à titre indicatif et nullement limitatif, en référence aux dessins annexés, dans lesquels :
- la figure 1 illustre une carte à puce multi-formats ;
- la figure 2 est une vue simplifiée d'une coupe transversale de la carte de la figure 1 ;
- la figure 3 illustre une carte à puce multi-formats selon un autre mode de réalisation de l'invention ;
- la figure 4 illustre une carte à puce multi-formats selon un autre mode de réalisation de l'invention ;
- la figure 5 illustre une carte à puce multi-formats selon un autre mode de réalisation de l'invention ;
- la figure 6 illustre un contour de carte à puce comprenant la carte à puce de la figure 1 ;
- la figure 7 illustre un contour de carte à puce comprenant plusieurs cartes à puces de la figure 1.

L'invention propose une carte à puce multi-formats.

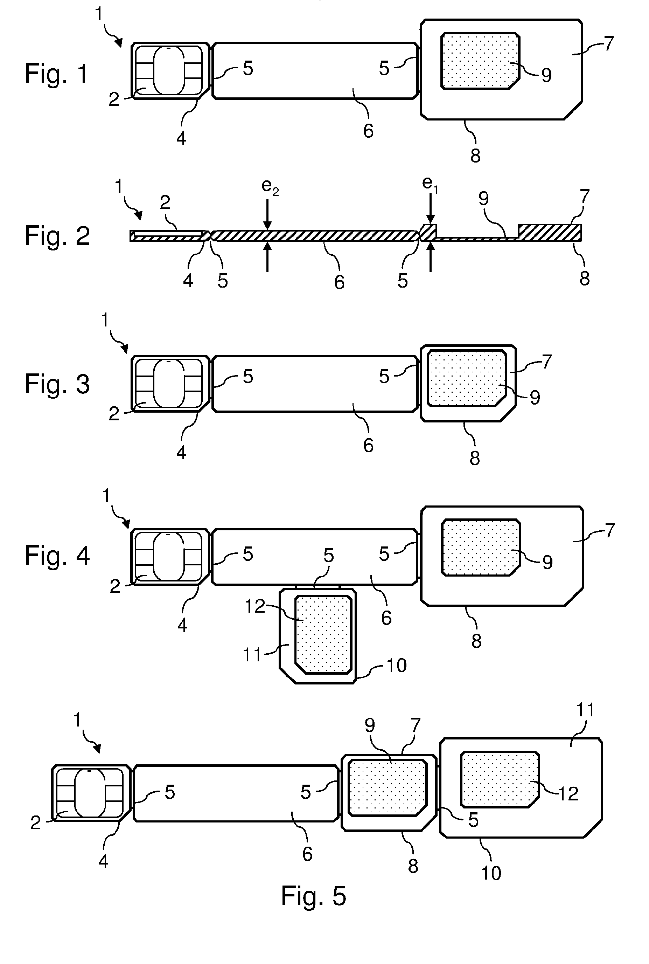

Selon un premier mode de réalisation, représenté schématiquement sur la figure 1, la carte à puce multi-formats 1 comprend :
- une puce à circuit intégré 2, solidaire d'un premier corps de carte à puce 4 correspondant à un premier facteur de forme ;
- une languette 6, jointe au premier corps de carte 4 et détachable de ce premier corps de carte 4, s'étendant dans un plan parallèle à ce premier corps de carte 4;
- un deuxième corps de carte à puce 8, correspondant à un deuxième facteur de forme de dimensions supérieures au premier facteur de forme.

Ce deuxième corps de carte 8 est joint à une extrémité de la languette 6 et s'étend dans un plan parallèle à cette languette 6. Ce deuxième corps de carte 8 est détachable de cette languette 6. Ce deuxième corps de carte 8 comprend un contour 7 et un logement 9 configuré pour recevoir le premier corps de carte 4. Ce logement 9 est ici une cavité, dont les dimensions et la profondeur correspondent aux dimensions du premier corps de carte 4. Ce premier corps de carte 4 peut ainsi y être inséré, après avoir été détaché de la languette 6.

Le deuxième corps de carte 8 présente une épaisseur supérieure à celle du premier corps de carte 4 et celle de la languette 6, comme illustré sur la figure 2. Dans cet exemple, le premier facteur de forme est 4FF. Ce facteur de forme est en cours de définition par l'ETSI (« European Telecommunications Standard Institute »). Le deuxième facteur de forme est 2FF, tel que défini par la norme internationale ISO/IEC 7810:2003. Ici, le contour 7 du deuxième corps de carte 8 a une épaisseur e₁ comprise entre 800µm et 840µm, et de préférence égale à 820µm. La languette 6 a une épaisseur e₂ comprise entre 650µm et 700µm, et de préférence égale à 680µm. L'épaisseur du premier corps de carte 4 est égale à e₂ à 5% près.

Dans cet exemple, la carte à puce 1 est réalisée dans un matériau thermoplastique, au moyen d'un procédé d'injection et de moulage.

Le premier 4 et le deuxième 8 corps de carte sont joints à la languette 6 par une liaison sécable 5. Cette liaison est configurée pour faciliter la découpe des corps de carte 4, 8 de la languette sans outil de découpe. Cette liaison est ici réalisée en prédécoupant des encoches 5 sur chacune des faces avant et arrière de la carte à puce 1.

De nombreux autres modes de réalisation sont possibles.

La figure 3 représente un deuxième mode de réalisation, dans lequel le deuxième corps de carte 8 correspond au facteur de forme 3FF, tel que défini par la norme ETSI 102 221. Cette norme définit notamment une longueur de 15 mm et une largeur de 12 mm.

La figure 4 représente un troisième mode de réalisation, dans lequel la carte à puce 1 comprend de plus un troisième corps de carte 10, correspondant à un troisième facteur de forme. Ce troisième corps de carte 10 comprend un contour 11 et un logement 12, configuré pour recevoir le premier corps de carte 4. Ce troisième corps de carte 10 est ici joint à la languette 6, sur un côté de cette languette 6, et s'étend dans un plan parallèle à cette languette 6. Ce troisième corps de carte 10 est avantageusement joint au moyen d'une liaison sécable 5. Ce troisième corps de carte 10 est ici du facteur de forme 3FF. Le premier et le deuxième facteur de forme sont respectivement 4FF et 2FF. Le logement respectif 9 et 12 de chacun des deux corps de carte 8 et 10, est configuré pour recevoir le premier corps de carte 4, de facteur de forme 4FF.

La figure 5 représente un autre mode de réalisation, dans lequel le troisième corps de carte 10, de facteur de forme 2FF, est joint au deuxième corps de carte 8, de format 3FF, sur l'un de ses côtés. Chacun de ces deux corps de carte 8 et 10, comprend un logement respectif 9 et 12, configuré pour recevoir le premier corps de carte 4, de facteur de forme 4FF.

Les logements respectifs 9 et 12 des deuxième 8 et troisième 10 corps de carte ne sont pas limités à recevoir des corps de carte d'un premier format. Par exemple, le logement 12 du troisième corps de carte 10 de facteur de forme 2FF peut être configuré pour recevoir le deuxième corps de carte 8 de facteur de forme 3FF.

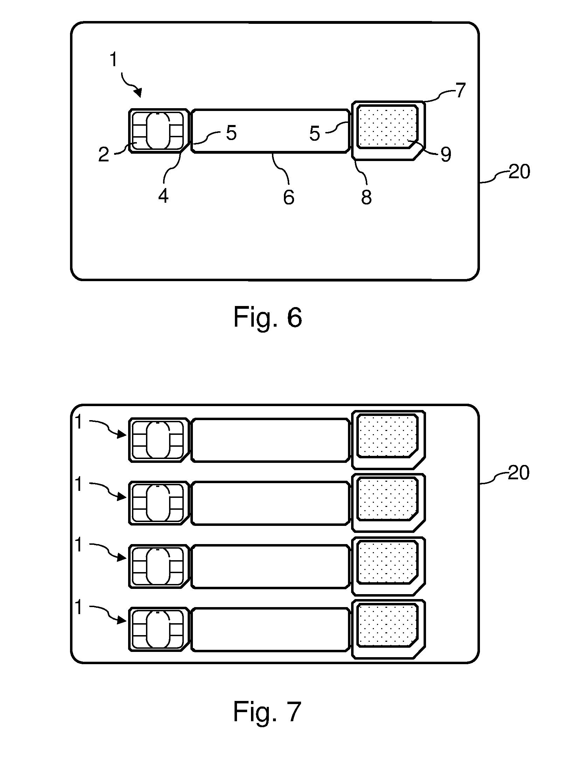

La figure 6 représente un support de carte 20 de format ISO ID-1, comprenant une carte à puce 1 détachable. Les dimensions de ce support de carte 20 sont définies par la norme internationale ISO/IEC 7810:2003. Ce support 20 a une épaisseur comprise entre 650µm et 700µm, et de préférence égale à 680µm.

Dans cet exemple, le support de carte est réalisé dans un matériau thermoplastique, au moyen d'un procédé d'injection et de moulage. La carte à puce 1 est détachable du support de carte. La liaison entre la carte 1 et le support de carte 20 est par exemple réalisé avec la même technique que la liaison sécable 5.

Ce support de carte 20 peut, dans un autre mode de réalisation, comporter plus d'une carte à puce 1, comme illustré à la figure 7. Dans cet exemple, le support de carte 20 comprend quatre cartes à puce 1. Chacune de ces cartes 1 comprend un premier corps de carte 4 de facteur de forme 4FF et deuxième corps de carte 8 de facteur de forme 3FF. Ce corps de carte 8 comprend un logement 9 configuré pour recevoir le premier corps de carte 4.

Dans les modes de réalisation décrits à titre d'exemple, chacune des cartes à puce 1 ne comporte qu'au plus un deuxième corps de carte d'un deuxième format ou un troisième corps de carte d'un troisième format. En variante, ces cartes 1 peuvent comporter plus d'un deuxième corps de carte d'un deuxième format ou d'un troisième corps de carte d'un troisième format.

Préférentiellement, le premier corps de carte 4 est de facteur de forme différent de 4FF.

Avantageusement, les corps de carte et la languette peuvent présenter plus de deux épaisseurs différentes.

En variante, la carte à puce 1 est fabriquée en matériau thermodurcissable.

En variante, la carte à puce 1 est fabriquée par un procédé d'usinage.

Avantageusement, la liaison sécable 5 d'un corps de carte est définie par découpe partielle du pourtour de ce corps de carte, ou par poinçonnage.

## Revendications

1. Carte à puce multi-formats (1) comportant :
- une puce à circuit intégré (2), solidaire d'un premier corps de carte (4) à puce d'un premier facteur de forme ;
- une languette (6), jointe au premier corps de carte et détachable de ce premier corps de carte ;
- un deuxième corps de carte (8) à puce d'un deuxième facteur de forme, de dimensions supérieures au premier facteur de forme, ce deuxième corps (8) comprenant un contour (7) et un logement (9) configuré pour recevoir le premier corps de carte ;
**caractérisé en ce que** le deuxième corps de carte (8) est joint à la languette (6), et est détachable de cette languette (6).

2. Carte à puce (1) selon la revendication 1, dans laquelle le contour du deuxième corps de carte (8) a une épaisseur supérieure à celle de la languette (6) et du premier corps de carte (4).

3. Carte à puce (1) selon la revendication 2, comprenant un troisième corps de carte (10) à puce d'un troisième facteur de forme, ce troisième corps de carte (10) comprenant un autre logement (12) configuré pour recevoir le premier corps de carte (4).

4. Carte à puce (1) selon la revendication 3, dans laquelle le troisième corps de carte (10) est joint au deuxième corps de carte (8), et est détachable de ce deuxième corps de carte.

5. Carte à puce (1) selon la revendication 3, dans laquelle le troisième corps de carte (10) est joint à la languette (6), et est détachable de cette languette.

6. Carte à puce (1) selon la revendication 3, dans laquelle le premier facteur de forme est 4FF.

7. Carte à puce (1) selon la revendication 6, dans laquelle l'un ou l'autre du deuxième et du troisième facteur de forme est 2FF ou 3FF.

8. Corps de carte à puce de format ISO ID-1 (20), comprenant au moins une carte à puce (1) conforme à la revendication 1.
